# EUROPÄISCHE PATENTSCHRIFT

(11) **EP 3 215 772 B1**
(45) Veröffentlichungstag und Bekanntmachung des Hinweises auf die Patenterteilung: **12.12.2018**
(21) Anmeldenummer: 15705206.9
(22) Anmeldetag: 14.02.2015
(51) Int. Cl.: F16K 31/42

(54) **VENTILEINRICHTUNG**
VALVE DEVICE
DISPOSITIF DE SOUPAPE

(43) Veröffentlichungstag der Anmeldung: 13.09.2017
(73) Patentinhaber: Festo AG & Co. KG, 73734 Esslingen (DE)
(72) Erfinder: SCHUBERT, Dominik, 73061 Ro Wälden (DE); KIEFER, Thomas, 73760 Ostfildern (DE)
(74) Vertreter: Patentanwälte Magenbauer & Kollegen Partnerschaft mbB
(86) Internationale Anmeldenummer: PCT/EP2015/000330
(87) Internationale Veröffentlichungsnummer: WO 2016/128007

(56) Entgegenhaltungen:
- EP-A2- 1 103 991
- EP-B1- 2 047 156
- DE-B3-102007 027 340
- DE-B3-102008 011 661
- JP-A- 2009 174 645
- US-A- 4 344 603

## Beschreibung

Die Erfindung betrifft eine Ventileinrichtung, mit mindestens einem elektrisch betätigbaren Steuerventil, das ein durch elektrische Ansteuerung zwischen einer ersten und einer zweiten Schaltstellung relativ zu einem Grundkörper verlagerbares Ventilglied aufweist, dem eine zur Ventileinrichtung gehörende Handhilfsbetätigungseinrichtung zugeordnet ist, die einen relativ zu dem Grundkörper des Steuerventils in Achsrichtung einer imaginären Verschiebeachse verschiebbaren Betätigungsstößel aufweist, der durch manuelle Beaufschlagung eines Betätigungsabschnittes entgegen der Kraft einer Rückstellfeder der Ventileinrichtung aus einer unbetätigten Stellung in eine betätigte Stellung verschiebbar ist, um mit einem Antriebsabschnitt auf das Ventilglied einzuwirken und dieses aus der ersten Schaltstellung in die zweite Schaltstellung zu verlagern.

Eine aus der DE 10 2007 027 340 B3 bekannte Ventileinrichtung dieser Art enthält ein Hauptventil, dem zwei elektrisch betätigbare Steuerventile als Vorsteuerventile zugeordnet sind. Jedes Steuerventil ist mit einer Handhilfsbetätigungseinrichtung ausgestattet, die ein von der elektrischen Ansteuerung unabhängiges, rein manuelles Umschalten des Ventilgliedes des betreffenden Steuerventils aus einer an einem Ventilsitz anliegenden ersten Schaltstellung in eine von dem Ventilsitz abgehobene zweite Schaltstellung ermöglicht. Die Verstellkraft wird dabei mittels eines verschiebbaren Betätigungsstößels aufgebracht, der durch eine Rückstellfeder in eine unbetätigte Stellung vorgespannt ist. Die Betätigungskraft wird manuell in einen von außen gut zugänglichen Betätigungsabschnitt des Betätigungsstößels eingeleitet. Bei der Rückstellfeder handelt es sich um eine Schraubenfeder, die koaxial zwischen dem Betätigungsstößel und dem Grund einer in einem Grundkörper des Steuerventils ausgebildeten und den Betätigungsstößel aufnehmenden Ausnehmung angeordnet ist. Die Rückstellfeder wirkt sich nachteilig auf die Gestaltungsfreiheit bei der Konstruktion des Betätigungsstößels und des Grundkörpers aus, da zum einen eine sacklochartige Vertiefung in dem Betätigungsstößel benötigt wird und zum anderen am Grund der den Betätigungsstößel aufnehmenden Ausnehmung zwingend eine Abstützfläche für die Rückstellfeder vorgesehen werden muss.

Aus der DE 10 2008 011 661 B3 und aus der EP 2 047 156 B1 gehen ebenfalls Ventileinrichtungen hervor, die ein elektrisch betätigbares Steuerventil aufweisen, das eine Handhilfsbetätigungseinrichtung besitzt, deren Betätigungsstößel mittels einer drückend wirkenden Schraubenfeder in die unbetätigte Stellung vorgespannt ist.

Aus der EP 1 103 991 A2 ist eine Ventileinrichtung bekannt, die einen Magnetkern aufweist, der einen beweglichen Ventilkörper bildet. Der Ventilkörper kann unter anderem mittels eines Stößels betätigt werde, der sich quer zu dem Ventilkörper erstreckt. An dem Stößel sind zwei elastische Zungen angebracht, die sich beide an einer Außenfläche eins Hauptteils eines Ventilgehäuses abstützen und den Stößel nach außen drücken. Ein äußeres Ende des Stößels kann mittels eines Schraubendrehers beaufschlagt werden, um den Stößel entgegen der Kraft der Zungen nach innen zu drücken, sodass er den Ventilkörper verschiebt.

Der Erfindung liegt die Aufgabe zugrunde, Maßnahmen zu treffen, die bei einer Vergrößerung des Gestaltungsspielraumes eine kostengünstige Realisierung einer Handhilfsbetätigungseinrichtung ermöglichen.

Zur Lösung dieser Aufgabe ist in Verbindung mit den eingangs genannten Merkmalen vorgesehen, dass die Rückstellfeder zwei durch einen Verbindungsabschnitt einstückig miteinander verbundene und unter elastischer Verformung des Verbindungsabschnittes um eine zu der Verschiebeachse des Betätigungsstößels rechtwinkelige und beabstandete Schwenkachse relativ zu einander verschwenkbare Federschenkel aufweist, von denen sich der eine an dem Grundkörper und der andere an dem Betätigungsstößel abstützt.

Auf diese Weise kann die für die Rückstellung des Betätigungsstößels der Handhilfsbetätigungseinrichtung verantwortliche Rückstellfeder in einen neben dem Betätigungsstößel liegenden Bereich verlegt werden, sodass sie sich nicht auf die in der Achsrichtung der Verschiebeachse des Betätigungsstößels gemessenen Abmessungen des Steuerventils auswirkt. Folglich kann das Steuerventil mit einer sehr niedrigen Bauhöhe realisiert werden. Man hat außerdem mehr Gestaltungsspielraum zur Umsetzung des in der Regel stirnseitig an dem Betätigungsstößel angeordneten Antriebsabschnittes, da eine bisher zur Aufnahme einer Rückstellfeder erforderliche sacklochartige Ausnehmung im Betätigungsstößel entfallen kann. Es besteht ferner die vorteilhafte Möglichkeit, die Rückstellfeder nicht nur zum Vorspannen des Betätigungsstößels zu verwenden, sondern gleichzeitig auch als Halteelement zur verliersicheren Fixierung des Betätigungsstößels bezüglich des Grundkörpers in der unbetätigten Stellung, sodass hierfür keine gesonderten Befestigungsmaßnahmen getroffen werden müssen.

Vorteilhafte Weiterbildungen der Erfindung gehen aus den Unteransprüchen hervor.

Die Rückstellfeder ist insbesondere so ausgebildet und angeordnet, dass sich in ihrer unbetätigten Stellung wenigstens ein Federschenkel und vorzugsweise jeder Federschenkel in einer Ebene erstreckt, die zumindest im Wesentlichen rechtwinkelig zu der Verschiebeachse des Betätigungsstößels ausgerichtet ist. Die beiden Federschenkel können hierbei insbesondere in zwei zueinander parallelen Ebenen ausgerichtet sein.

Grundsätzlich ist es von Vorteil, wenn die Rückstellfeder derart in den Grundkörper eingesetzt ist, dass sie auch im unbetätigten Zustand des Betätigungsstößels bereits unter einer gewissen Vorspannung steht, durch die der Betätigungsstößel in die unbetätigte Stellung vorgespannt ist.

Die Rückstellfeder weist vorzugsweise eine imaginäre Hauptachse auf, die rechtwinkelig zu der Schwenkachse ausgerichtet ist und sich zumindest im unbetätigten Zustand des Betätigungsstößels zwischen den beiden Federschenkeln erstreckt. Die Hauptachse verläuft vorzugsweise auf der Winkelhalbierenden zwischen den beiden Federschenkeln, wenn die Rückstellfeder im nicht eingebauten spannungsneutralen Zustand betrachtet wird.

Bevorzugt ist die Rückstellfeder bezogen auf die Achsrichtung der Verschiebeachse des Betätigungsstößels auf gleicher Höhe mit dem Betätigungsstößel neben dem Betätigungsstößel angeordnet. Indem sie "liegend" eingebaut wird, also mit quer zur Verschiebeachse des Betätigungsstößels ausgerichteten Federschenkeln, wirkt sich ihr Vorhandensein nicht nachteilig auf die in Achsrichtung der Verschiebeachse des Betätigungsstößels gemessene Bauhöhe des Grundkörpers aus.

Die Rückstellfeder ist insbesondere derart neben dem Betätigungsstößel angeordnet, dass sich die beiden Federarme zwischen dem Betätigungsstößel und dem Verbindungsabschnitt der Rückstellfeder befinden. Der Verbindungsabschnitt der Rückstellfeder ist also mit Querabstand zu dem Betätigungsstößel angeordnet, wobei sich die Federarme ausgehend von dem Verbindungsabschnitt mit ihren freien Enden in Richtung zu dem Betätigungsstößel erstrecken.

Die Rückstellfeder ist insbesondere in einer in dem Grundkörper ausgebildeten Federaufnahmekammer untergebracht, die sich quer und insbesondere rechtwinkelig zu einer den Betätigungsstößel aufnehmenden Stößelaufnahmeausnehmung erstreckt. Die Federaufnahmekammer mündet seitlich in die Stößelaufnahmeausnehmung ein und erlaubt auf diese Weise das bevorzugt ständige Zusammenwirken des einen Federschenkels mit dem Betätigungsstößel der Handhilfsbetätigungseinrichtung.

Vorzugsweise ist die Federaufnahmekammer so gestaltet, dass sie einen den Verbindungsabschnitt der Rückstellfeder aufnehmenden Kopfabschnitt besitzt und darüber hinaus zwei von dem Kopfabschnitt ausgehende, sich in Richtung zu der Stößelaufnahmeausnehmung erstreckende Schenkelaufnahmeabschnitte aufweist, die durch eine Trennwand des Grundkörpers voneinander abgeteilt sind und von denen derjenige Schenkelaufnahmeabschnitt, in dem sich der auf den Betätigungsstößel einwirkende Federschenkel erstreckt, seitlich in die Stößelaufnahmeausnehmung einmündet. Derjenige Schenkelaufnahmeabschnitt, der den sich am Grundkörper des Steuerventils abstützenden Federschenkel aufnimmt, endet stirnseitig zweckmäßigerweise mit Abstand neben der Stößelaufnahmeausnehmung.

Vorzugsweise ist der sich am Grundkörper abstützende Federschenkel in dem ihn aufnehmenden Schenkelaufnahmeabschnitt der Schenkelaufnahmeausnehmung in der Schwenkrichtung der zwischen den beiden Federschenkeln möglichen Schwenkbewegung abgestützt. Mit anderen Worten erfolgt eine Abstützung in der Umfangsrichtung der Schwenkachse dieser Schwenkbewegung, und zwar in beiden möglichen Richtungen, sodass bei der Betätigung des Betätigungsstößels nur der auf den Betätigungsstößel einwirkende Federschenkel relativ zum Grundkörper verschwenkt wird.

Bevorzugt ist die Rückstellfeder mit derartiger Orientierung im Grundkörper des Steuerventils angeordnet, dass ihr sich am Grundkörper abstützender Federschenkel bezogen auf die Achsrichtung der Verschiebeachse des Betätigungsstößels näher bei dem Antriebsabschnitt des Betätigungsstößels liegt als der sich am Betätigungsstößel abstützende Federschenkel. Anders ausgedrückt liegt der Betätigungsabschnitt des Betätigungsstößels in Achsrichtung der Verschiebeachse näher bei einer Außenfläche des Grundkörpers als der Antriebsabschnitt des Betätigungsstößels, wobei sich von den beiden Federschenkeln der Rückstellfeder der sich am Grundkörper abstützende Federschenkel tiefer im Grundkörper befindet und weiter von der genannten Außenfläche entfernt ist als der mit dem Betätigungsstößel kooperierende Federschenkel.

Vorzugsweise wirkt der mit dem Betätigungsstößel zusammenwirkende Federschenkel im Bereich des Betätigungsabschnittes mit dem Betätigungsstößel zusammen.

Es ist von Vorteil, wenn der sich am Grundkörper abstützende Federschenkel in der zur Schwenkachse rechtwinkeligen Richtung kürzer ist als der am Betätigungsstößel angreifende Federschenkel. Auf diese Weise können die beiden Federschenkel mit geringer Spreizung sehr nahe beieinanderliegend angeordnet werden, ohne die federnde Rückstellfunktion zu beeinträchtigen.

Der sich am Betätigungsstößel abstützende Federschenkel taucht zweckmäßigerweise in eine periphere, also seitlich angeordnete Abstütznut des Betätigungsstößels ein und kommt seiner Abstützfunktion dadurch nach, dass er sich zumindest an derjenigen Nutflanke der Abstütznut abstützt, die von dem Betätigungsabschnitt wegweist, das heißt die in die gleiche Richtung wie diejenige Verschieberichtung des Betätigungsstößels orientiert ist, in der sich der Betätigungsstößel beim Verlagern in die betätigte Stellung bewegt. Allerdings ist es zweckmäßig, die Nutbreite der Abstütznut so zu wählen, dass sich der betreffende Federschenkel an beiden Nutflanken der Abstütznut abstützen kann.

Der Eingriff des unmittelbar für die Rückstellung des Betätigungsstößels verantwortlichen Federschenkels in eine Abstütznut des Betätigungsstößels hat auch den Vorteil, dass der Betätigungsstößel an einem Herausfallen aus der ihn aufnehmenden Stößelaufnahmeausnehmung des Grundkörpers gehindert wird. Die Rückstellfeder übernimmt folglich eine Doppelfunktion, indem sie zum einen für die Rückstellung des Betätigungsstößels und zum anderen für ein Festhalten des Betätigungsstößels in seinen beiden axialen Richtungen bezüglich des Grundkörpers verantwortlich ist.

Wird der Betätigungsstößel an seinem Betätigungsabschnitt beaufschlagt, um ihn in Richtung der betätigten Stellung zu verschieben, wirkt er zweckmäßigerweise mit einer in der dabei auftretenden Verschieberichtung weisenden Abstützfläche auf den einen der beiden Federschenkel ein. Diese Abstützfläche ist zweckmäßigerweise von der Ringnut der schon erwähnten Abstütznut gebildet. Es ist aber auch möglich, auf eine Abstütznut zu verzichten und am Außenumfang des Betätigungsstößels eine einfache Abstufung vorzusehen, insbesondere eine Ringstufe, wobei die axial orientierte Fläche dieser Abstufung die Abstützfläche definiert. Der zugeordnete Federschenkel ragt zweckmäßigerweise in einer zu der Verschiebeachse quer verlaufenden Richtung vor die am Betätigungsstößel ausgebildete Abstützfläche.

Die Rückstellfeder kann eine gebogene Blattfeder sein. Zweckmäßigerweise hat diese gebogene Blattfeder bereits im nicht vorgespannten, spannungsneutralen Zustand eine V-förmige oder U-förmige Gestaltung. Der Verbindungsabschnitt einer solchen Rückstellfeder ist bogenförmig gestaltet.

Als vorteilhafter wird es allerdings angesehen, wenn eine sogenannte Schenkelfeder als Rückstellfeder verwendet wird. Eine solche Schenkelfeder hat einen nach Art einer Schraubenfeder gewundenen Verbindungsabschnitt, sodass der Verbindungsabschnitt über mehrere schraubenförmige Windungen verfügt, die am einen Ende in den einen Federschenkel und am anderen Ende in den anderen Federschenkel auslaufen. Einer der Vorteile der als Schenkelfeder ausgebildeten Rückstellfeder besteht darin, dass die beim relativen Verschwenken der beiden Federarme in dem Verbindungsabschnitt auftretenden Spannungen wesentlich geringer sind als bei einer nur einfach gebogenen Blattfeder.

Der Federkörper der Rückstellfeder hat zweckmäßigerweise einen kreisförmigen Querschnitt. Er ist insbesondere von einer Drahtstruktur gebildet.

Vorzugsweise ist mindestens einer und zweckmäßigerweise jeder der beiden Federschenkel an seinem vom Verbindungsabschnitt entfernten Endabschnitt mindestens einfach umgebogen. Bevorzugt ist zumindest der am Betätigungsstößel angreifende, sich beim Verschieben des Betätigungsstößels verschwenkende Federschenkel an seinem Endabschnitt U-förmig umgebogen, sodass seine freie Stirnfläche in Richtung zum Verbindungsabschnitt weist. Dadurch kann unter anderem vermieden werden, dass der Federschenkel bei der Schwenkbewegung am Grundkörper schabt. Die Handhilfsbetätigungseinrichtung ist vorzugsweise so ausgebildet, dass der Betätigungsstößel in seiner betätigten Stellung beliebig lange lösbar blockierbar ist, um das Ventilglied des Steuerventils durch ständige Beaufschlagung in der zweiten Schaltstellung zu halten. Somit besteht die Möglichkeit, den Betätigungsstößel zum einen kurzzeitig tastend zu betätigen, wenn das Steuerventil nur kurz betätigt werden soll, oder aber das Ventilglied des Steuerventils für längere Zeit ohne elektrische Unterstützung in der zweiten Schaltstellung zu halten, indem der Betätigungsstößel in der betätigten Stellung lösbar blockiert wird.

Zum Blockieren der betätigten Stellung des Betätigungsstößels kann der Betätigungsstößel an seinem Betätigungsabschnitt zweckmäßigerweise zwischen einer Freigabestellung und einer Blockierstellung verdreht werden. In der Blockierstellung ist der Betätigungsstößel bezüglich des Grundkörpers zweckmäßigerweise formschlüssig verriegelt.

Das Steuerventil ist vorzugsweise so ausgebildet, dass sein Ventilglied in der ersten Schaltstellung an einem Ventilsitz anliegt und in der zweiten Schaltstellung gegen eine Federkraft von dem Ventilsitz abgehoben ist. Bei dem Steuerventil handelt es sich zweckmäßigerweise um ein 3/2-Wegeventil. Die Verschiebeachse des Betätigungsstößels ist insbesondere rechtwinkelig zur Bewegungsrichtung des Ventilgliedes ausgerichtet.

Besonders vorteilhaft ist die Realisierung der Handhilfsbetätigungseinrichtung bei einem als Magnetventil ausgeführten Steuerventil. Ein solches Magnetventil verfügt über eine Elektromagneteinrichtung zur elektrisch aktivierbaren Betätigung des Ventilgliedes. Allerdings kann das erfindungsgemäße Prinzip auch auf andere Arten von Ventilen übertragen werden.

Bei der Ventileinrichtung handelt es sich vorzugsweise um ein vorgesteuertes Mehrwegeventil. Hierbei verfügt die Ventileinrichtung über ein durch Fluidkraft betätigbares Hauptventil, das mit mindestens einem elektrisch betätigbaren Steuerventil als Vorsteuerventil ausgestattet ist, mit dessen Hilfe sich das Hauptventil antreiben lässt. Die Ventileinrichtung kann auch mit zwei derartigen Steuerventilen beziehungsweise Vorsteuerventilen ausgestattet sein.

Nachfolgend wird die Erfindung anhand der beiliegenden Zeichnung näher erläutert. In dieser zeigen:
- Figur 1: eine bevorzugte erste Bauform der erfindungsgemäßen Ventileinrichtung in einer perspektivischen Ansicht, wobei die elektrisch aktivierbare Betätigungseinrichtung des Steuerventils nur in ihren Umrissen strichpunktiert angedeutet ist,
- Figur 2: die Ventileinrichtung aus Figur 1 in einem Längsschnitt gemäß Schnittlinie II-II aus Figur 1, wobei der Betätigungsstößel der Handhilfsbetätigungseinrichtung in seiner unbetätigten Stellung gezeigt ist,

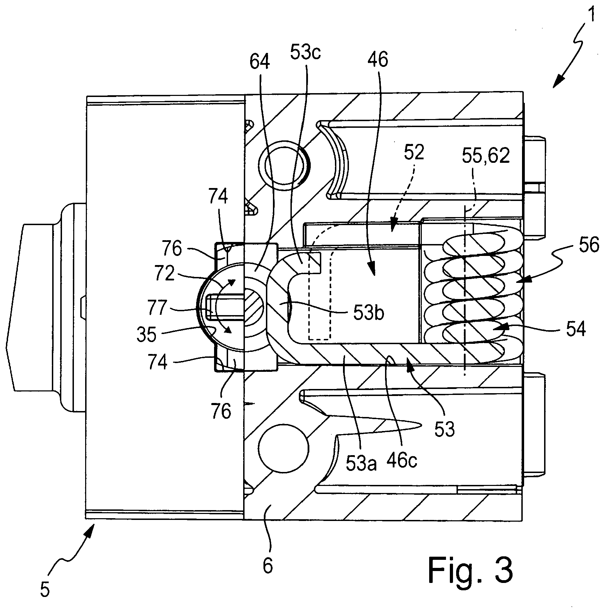

- Figur 3: einen gestuften Schnitt durch die Anordnung aus Figur 2 gemäß der dortigen Schnittlinie III-III,
- Figur 4: einen Ausschnitt des Steuerventils im Bereich der Handhilfsbetätigungseinrichtung in einem der Figur 2 entsprechenden Längsschnitt, wobei der Betätigungsstößel bei Einnahme seiner betätigten Stellung gezeigt ist, und
- Figur 5: eine isometrische Einzeldarstellung der bei der Ventileinrichtung gemäß Figuren 1 bis 4 verwendeten, als Schenkelfeder ausgebildeten Rückstellfeder im nicht vorgespannten Neutralzustand.

In der Zeichnung ist eine bevorzugte Ausführungsform einer Ventileinrichtung 1 illustriert, in der die Erfindung enthalten ist. Die Ventileinrichtung 1 ist hier in Form eines vorgesteuerten Mehrwegeventils ausgebildet und verfügt über ein Hauptventil 2, dem mindestens ein elektrisch betätigbares Steuerventil 5 als Vorsteuerventil zugeordnet ist.

Das Hauptventil 2 und das mindestens eine Steuerventil 5 sind zu einer Baugruppe zusammengefasst.

Das Hauptventil 2 verfügt über ein Hauptventilgehäuse 3, in dem ein zwischen verschiedenen Schaltstellungen umschaltbares Hauptventilglied 4 angeordnet ist, bei dem es sich vorzugsweise um einen kolbenartig ausgebildeten Ventilschieber handelt. Je nach Schaltstellung kann das Hauptventilglied 4 nicht weiter dargestellte Hauptventilkanäle des Hauptventils 2 in unterschiedlichem Muster miteinander verbinden und voneinander abtrennen, um gewisse Fluidströmungen zuzulassen oder zu unterbinden. Normalerweise erstrecken sich in dem Hauptventilgehäuse 3 ein mit einer Druckquelle verbindbarer Speisekanal, ein mit einer Drucksenke, zum Beispiel der Atmosphäre, verbindbarer Entlastungskanal und mindestens ein mit einem zu betätigenden Verbraucher verbindbarer Arbeitskanal. Der Arbeitskanal kann dann je nach Schaltstellung des Hauptventilgliedes 4 entweder mit dem Speisekanal oder mit dem Entlastungskanal verbunden werden. Das Hauptventil 2 kann auch ein 5/2-Wegeventil sein, das über zwei Arbeitskanäle und zwei Entlastungskanäle verfügt, wobei die Arbeitskanäle abwechselnd mit dem Speisekanal und mit einem der Entlastungskanäle verbindbar sind.

Das Hauptventil 2 wird bevorzugt zur Verteilung von Druckluft eingesetzt, wobei die an den Speisekanal anschließbare Druckquelle eine Druckluftquelle ist.

Ein über eine 3/2-Ventilfunktion verfügendes Hauptventil 2 ist normalerweise mit nur einem Vorsteuerventil ausgestattet, während ein über eine 5/2-Ventilfunktion verfügendes Hauptventil 2 je nachdem, ob es monostabil oder bistabil ausgeführt ist, mit nur einem Vorsteuerventil oder mit zwei Vorsteuerventilen ausgestattet ist. In der Zeichnung ist eine elektropneumatisch vorgesteuerte Ventileinrichtung 1 gezeigt, deren Hauptventil 2 mit nur einem als Vorsteuerventil fungierenden Steuerventil 5 kombiniert ist, wobei dieses Steuerventil 5 in Achsrichtung einer Längsachse 9 der Ventileinrichtung 1 stirnseitig an dem Hauptventil 2 angeordnet ist.

Das Steuerventil 5 ist in der Lage, eine Fluidbeaufschlagung des Hauptventilgliedes 4 zu steuern, um dieses gemäß Doppelpfeil 10 in die gewünschte Schaltstellung zu verlagern.

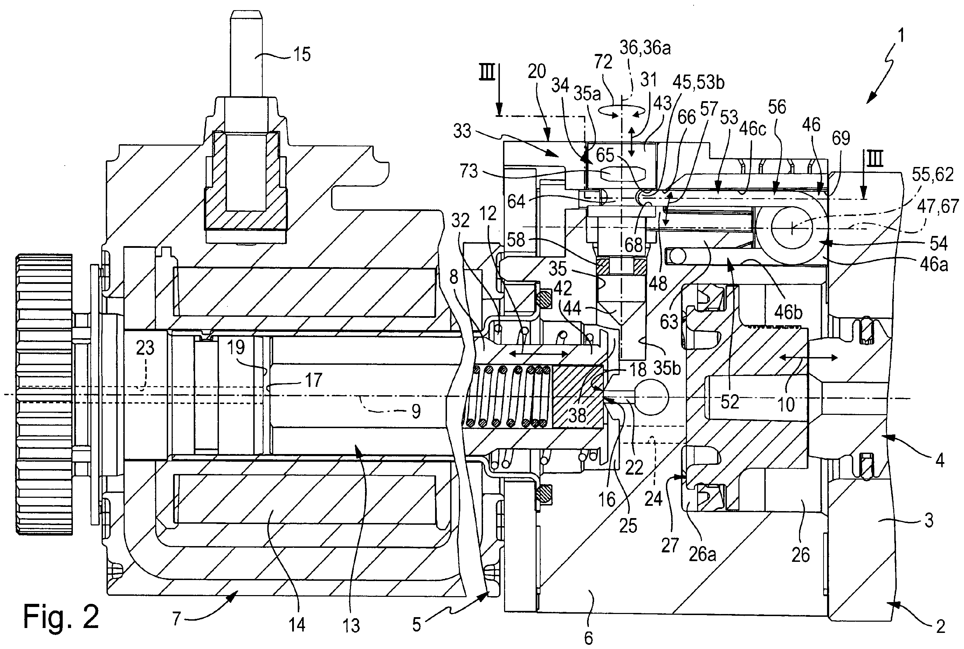

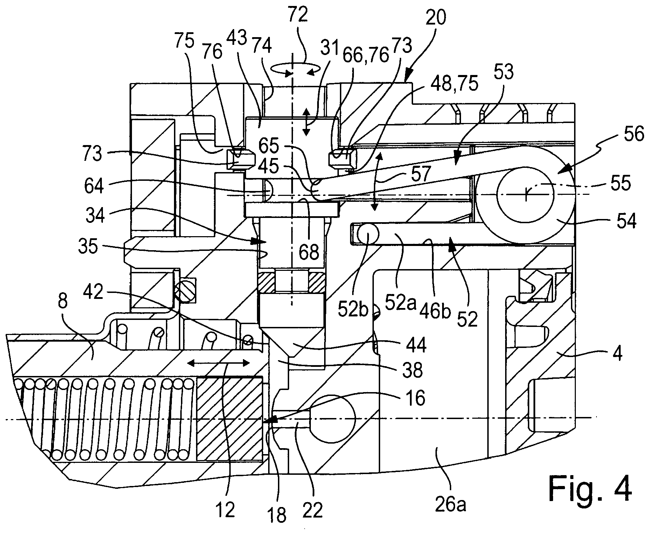

Das Steuerventil 5 enthält einen ein- oder mehrteiligen Grundkörper 6 und ein diesbezüglich unter Ausführung einer linearen Umschaltbewegung 12 zwischen einer aus Figur 2 ersichtlichen ersten Schaltstellung und einer aus Figur 4 ersichtlichen zweiten Schaltstellung umschaltbares Ventilglied 8. Der Grundkörper 6 kann gleichzeitig einen Bestandteil des Hauptventilgehäuses 3 bilden und fungiert beim Ausführungsbeispiel als ein Gehäusedeckel des Hauptventilgehäuses 3, der stirnseitig eine Ventilkammer 26 verschließt, in der sich das Hauptventilglied 4 erstreckt. Zweckmäßigerweise begrenzt der Grundkörper 6 gemeinsam mit einer stirnseitigen Beaufschlagungsfläche 27 des Hauptventilgliedes 4 eine Beaufschlagungskammer 26a, die mit dem Hauptventilglied 4 antriebsmäßig verbunden ist und beispielsweise von einem als Antriebskolben ausgebildeten Endabschnitt des Hauptventilgliedes 4 gebildet ist.

Das Steuerventil 5 verfügt über eine elektrisch betätigbare Antriebseinrichtung 7, bei der es sich zweckmäßigerweise um eine Elektromagneteinrichtung handelt, sodass das Steuerventil 5 gemäß Ausführungsbeispiel ein Magnetventil ist. Die Erfindung lässt sich allerdings auch bei anderen elektrisch betätigbaren Ventilarten realisieren, so beispielsweise bei Piezoventilen.

Die Antriebseinrichtung 7 kann derart elektrisch angesteuert werden, dass sie die Umschaltbewegung 12 des Ventilgliedes 8 hervorruft und dafür sorgt, dass das Ventilglied 8 entweder die erste Schaltstellung gemäß Figur 2 oder die zweite Schaltstellung gemäß Figur 4 einnimmt. Bevorzugt ist das Ventilglied 8 ein integraler Bestandteil eines beweglichen Magnetankers 13 der als Elektromagneteinrichtung ausgebildeten Antriebseinrichtung 7, der durch elektrisches Erregen einer nur in Figur 2 angedeuteten Spuleneinrichtung 14 verschiebbar ist. Die hierfür erforderlichen elektrischen Betätigungssignale können über eine elektromechanische Schnittstelleneinrichtung 15 in die Antriebseinrichtung 7 eingespeist werden.

Anstatt als Baueinheit können das Ventilglied 8 und der bewegliche Magnetanker 13 des Steuerventils 5 auch als gesonderte Teile ausgeführt sein, die auf beliebige Weise antriebsmäßig miteinander verbunden sind.

Das Ventilglied 8 ist insbesondere stößelartig ausgebildet und verfügt an seinen beiden Stirnseiten über eine erste beziehungsweise zweite Dichtfläche 16, 17. Die erste Dichtfläche 16 liegt einem am Grundkörper 6 ausgebildeten ersten Ventilsitz 18 gegenüber, der die Mündung eines in dem Grundkörper 6 verlaufenden ersten Ventilkanals 22 umrahmt. Der in Achsrichtung der Umschaltbewegung 12 axial entgegengesetzten zweiten Dichtfläche 17 liegt ein bevorzugt an der Antriebseinrichtung 7 ausgebildeter zweiter Ventilsitz 19 gegenüber, der die Kanalmündung eines andernends zur Atmosphäre ausmündenden zweiten Ventilkanals 23 umrahmt.

Im Betrieb der Ventileinrichtung 1 steht der erste Ventilkanal 22 mit einer Druckquelle in Verbindung, beispielsweise indem er von dem oben erwähnten Speisekanal des Hauptventils 2 abgezweigt ist, der an eine externe Druckquelle angeschlossen ist.

Der erste Ventilsitz 18 befindet sich in einer in dem Grundkörper 6 ausgebildeten Steuerkammer 25, die über einen dritten Ventilkanal 24 ständig mit der Beaufschlagungskammer 26a verbunden ist.

Befindet sich das Ventilglied 8 des Steuerventils 5 in der ersten Schaltstellung, liegt es unter Abdichtung an dem ersten Ventilsitz 18 an und trennt den ersten Ventilkanal 22 von der Steuerkammer 25 ab. Gleichzeitig ist das Ventilglied 8 dabei von dem zweiten Ventilsitz 19 abgehoben und stellt eine Verbindung zwischen dem dritten Ventilkanal 24 und dem zweiten Ventilkanal 23 her, sodass die Beaufschlagungskammer 26a zur Atmosphäre druckmäßig entlastet wird. Auf diese Weise kann das Hauptventilglied 4 die aus Figur 2 ersichtliche Schaltstellung einnehmen, in der die Beaufschlagungskammer 26a ein minimales Volumen aufweist.

In der aus Figur 4 ersichtlichen zweiten Schaltstellung ist das Ventilglied 8 von dem ersten Ventilsitz 18 abgehoben und liegt gleichzeitig am zweiten Ventilsitz 19 an. Auf diese Weise strömt Druckmedium aus dem geöffneten ersten Ventilkanal 22 über die Steuerkammer 25 in die Beaufschlagungskammer 26a hinein, wo sie auf die Beaufschlagungsfläche 27 des Hauptventilgliedes 4 einwirkt und selbiges unter Vergrößerung des Volumens der Beaufschlagungskammer 26a in seine andere Schaltstellung verlagert.

Bei deaktivierter Antriebseinrichtung 7 nimmt das Ventilglied 8 des Steuerventils 5 die erste Schaltstellung ein, die durch eine das Ventilglied 8 beaufschlagende Federeinrichtung 32 aufrechterhalten wird. Zum Umschalten in die zweite Schaltstellung ist durch die Antriebseinrichtung 7 folglich die rückstellend wirkende Kraft der Federeinrichtung 32 zu überwinden.

Die Ventileinrichtung 1 besteht bei einem nicht gezeigten Ausführungsbeispiel ausschließlich aus dem elektrisch betätigbaren Steuerventil 5, das in diesem Fall nicht als Vorsteuerventil eingesetzt wird, sondern selbst ein zur unmittelbaren Ansteuerung eines Verbrauchers nutzbares Ventil repräsentiert. Es kann dann beispielsweise mit seinem Grundkörper 6 an einem Tragkörper befestigt werden.

Das Steuerventil 5 ist zusätzlich zu der elektrisch betätigbaren Antriebseinrichtung 7 mit einer Handhilfsbetätigungseinrichtung 33 ausgestattet, die es ermöglicht, das Ventilglied 8 ohne Mitwirkung der Antriebseinrichtung 7, durch eine rein manuell aufbringbare Betätigungskraft, aus seiner ersten Schaltstellung in die zweite Schaltstellung zu verlagern und dort auch so lange wie gewünscht zu halten. Die Handhilfsbetätigungseinrichtung 33 wird vor allem zu Wartungszwecken oder bei einem Testbetrieb der Ventileinrichtung 1 genutzt.

Die Handhilfsbetätigungseinrichtung 33 enthält einen Betätigungsstößel 34, der in einer zu einer ersten Außenfläche des Grundkörpers 6 hin offenen Ausnehmung, die als Stößelaufnahmeausnehmung 35 bezeichnet sei, in Achsrichtung einer imaginären Verschiebeachse 36 linear verschiebbar angeordnet ist. Der Betätigungsstößel 34 hat eine Längsgestalt und erstreckt sich axial in der Stößelaufnahmeausnehmung 35, wobei seine Längsachse 36a mit der Verschiebeachse 36 zusammenfällt. Die mögliche Verschiebebewegung des Betätigungsstößels 34 ist bei 31 durch einen Doppelpfeil angedeutet.

Die Stößelaufnahmeausnehmung 35 hat zweckmäßigerweise einen kreisförmigen Querschnitt, wobei sie in ihrer Längsrichtung abgestuft ausgeführt sein kann. Die Verschiebeachse 36 ist zweckmäßigerweise rechtwinkelig zu der Außenfläche 20 ausgerichtet, zu der die Stößelaufnahmeausnehmung 35 mit ihrem äußeren Endabschnitt 35a ausmündet.

Der innere axiale Endabschnitt 35b der Stößelaufnahmeausnehmung 35 steht über einen Durchgang 38 mit demjenigen Bereich der Steuerkammer 25 in Verbindung, in dem sich der die erste Dichtfläche 16 aufweisende vordere Endabschnitt 42 des Ventilgliedes 8 befindet.

Der im Bereich des inneren Endabschnittes 35b der Stößelaufnahmeausnehmung 35 angeordnete Endabschnitt des Betätigungsstößels 34 bildet einen zum Zusammenwirken mit dem Ventilglied 8 vorgesehenen Antriebsabschnitt 44. Der axial entgegengesetzte äußere Endabschnitt des Betätigungsstößels 34 ist dem äußeren Endabschnitt 35a der Stößelaufnahmeausnehmung 35 zugeordnet, wobei die Länge des Betätigungsstößels 34 insbesondere so gewählt ist, dass er zu keiner Zeit axial aus der Stößelaufnahmeausnehmung 35 herausragt. Der äußere axiale Endabschnitt des Betätigungsstößels 34 bildet einen für manuelle Betätigung ausgelegten Betätigungsabschnitt 43 und ist von der Seite der ersten Außenfläche 20 her zugänglich, um manuell mit einer drückenden Betätigungskraft beaufschlagt werden zu können, die in Richtung des inneren Endabschnittes 35b der Stößelaufnahmeausnehmung 35 wirkt.

Der Betätigungsstößel 34 ist zweckmäßigerweise ein sowohl den Betätigungsabschnitt 43 als auch den Antriebsabschnitt 44 beinhaltendes einstückiges Bauteil. Dies hat zur Folge, dass der Antriebsabschnitt 44 die Bewegungen des Betätigungsabschnittes 43 jeweils unmittelbar mitmacht.

Durch eine Rückstellfeder 56 ist der Betätigungsstößel 34 in der Richtung der Verschiebeachse 36 nach axial außen in eine aus Figur 2 ersichtliche unbetätigte Stellung vorgespannt. Ein in den Betätigungsstößel 34 seitlich eingreifendes Sicherungsglied 45 hält den Betätigungsstößel 34 dabei in der Stößelaufnahmeausnehmung 35 zurück und verhindert sein Herausfallen.

Durch manuelles Aufbringen einer Drückkraft auf die axiale Stirnfläche des Betätigungsabschnittes 43 kann der Betätigungsstößel 34 entgegen der Kraft der Rückstellfeder 56 aus der unbetätigten Stellung in eine aus Figur 4 ersichtliche betätigte Stellung verschoben werden. Wird auf eine noch zu erläuternde Blockiermaßnahme verzichtet, schiebt die Rückstellfeder 56 den Betätigungsstößel 34 wieder in die unbetätigte Stellung zurück, sobald die Drückkraft wieder weggenommen wird. Man kann hier von einer tastenden Betätigung sprechen.

Beim Verschieben des Betätigungsstößels 34 in die betätigte Stellung drückt der Antriebsabschnitt 44 nach Zurücklegen einer kurzen Wegstrecke durch den Durchgang 38 hindurch auf den vorderen Endabschnitt 42 des Ventilgliedes 8. Dadurch wird das Ventilglied 8 aus seiner ersten Schaltstellung in seine zweite Schaltstellung verlagert. Die betätigte Stellung des Betätigungsstößels 34 liegt vor, wenn das Ventilglied 8 seine zweite Schaltstellung erreicht hat.

Die Verschiebeachse 36 des Betätigungsstößels 34 verläuft quer und insbesondere rechtwinkelig zur Richtung der Umschaltbewegung 12 des Ventilgliedes 8. Eine optimale Kraftumlenkung zwischen der auf den Betätigungsstößel 34 manuell aufgebrachten Drückkraft in eine das Ventilglied 8 in die zweite Schaltstellung verlagernde Umschaltkraft wird dadurch begünstigt, dass der Betätigungsstößel 34 an seinem Antriebsabschnitt 44 zum freien Ende hin konisch verjüngt ausgebildet ist. Bevorzugt hat der Antriebsabschnitt 44 eine kegelige Form, wobei die Kegelspitze auf der Verschiebeachse 36 liegt.

Ein am Außenumfang des Betätigungsstößels 34 angeordneter Dichtungsring 58 liegt ständig unter Abdichtung und gleitverschieblich an der Innenumfangsfläche der Stößelaufnahmeausnehmung 35 an und verhindert dadurch einen Fluidaustritt aus der Steuerkammer 25 durch die mit der Steuerkammer 25 in Fluidverbindung stehende Stößelaufnahmeausnehmung 35 hindurch.

Die für die Rückstellung des Betätigungsstößels 34 in die unbetätigte Stellung und auch zum Festhalten des Betätigungsstößels 34 in der unbetätigten Stellung dienende Rückstellfeder 56 befindet sich nicht in bisher üblicher Weise in dem inneren Endabschnitt 35b der Stößelaufnahmeausnehmung 35, sondern ist außerhalb derselben und bevorzugt längsseits neben der Stößelaufnahmeausnehmung 35 angeordnet. Bevorzugt ist die Rückstellfeder 56 in einer in dem Grundkörper 6 ausgebildeten Federaufnahmekammer 46 aufgenommen, die eine Längserstreckung mit Längsachse 47 aufweist und die sich mit bezüglich der Verschiebeachse 36 quer und insbesondere rechtwinkeliger Ausrichtung ihrer Längsachse 47 neben der Stößelaufnahmeausnehmung 35 in dem Grundkörper 6 erstreckt. Die Federaufnahmekammer 46 mündet in einem Mündungsbereich 48 an der peripheren Innenumfangsfläche in die Stößelaufnahmeausnehmung 35 ein, wobei die Rückstellfeder 56 durch diesen Mündungsbereich 48 hindurchgreift und auf diese Weise mit dem Betätigungsstößel 34 zusammenwirkt.

Die Rückstellfeder 56 hat eine spezielle Gestaltung. Sie verfügt über zwei jeweils frei endende Federschenkel, die zur besseren Unterscheidung auch als erster Federschenkel 52 und zweiter Federschenkel 53 bezeichnet werden und die unter Zwischenschaltung eines Verbindungsabschnittes 54 der Rückstellfeder 56 einstückig miteinander verbunden sind.

Der Verbindungsabschnitt 54 definiert eine imaginäre Schwenkachse 55, von der die beiden Federschenkel 52, 53 wegragen und um die die beiden Federschenkel 52, 53 unter gleichzeitiger elastischer Verformung des Verbindungsabschnittes 54 relativ zueinander verschwenkbar sind. Die zwischen den beiden Federschenkeln 52, 53 mögliche relative Schwenkbewegung ist bei 57 durch einen Doppelpfeil angedeutet.

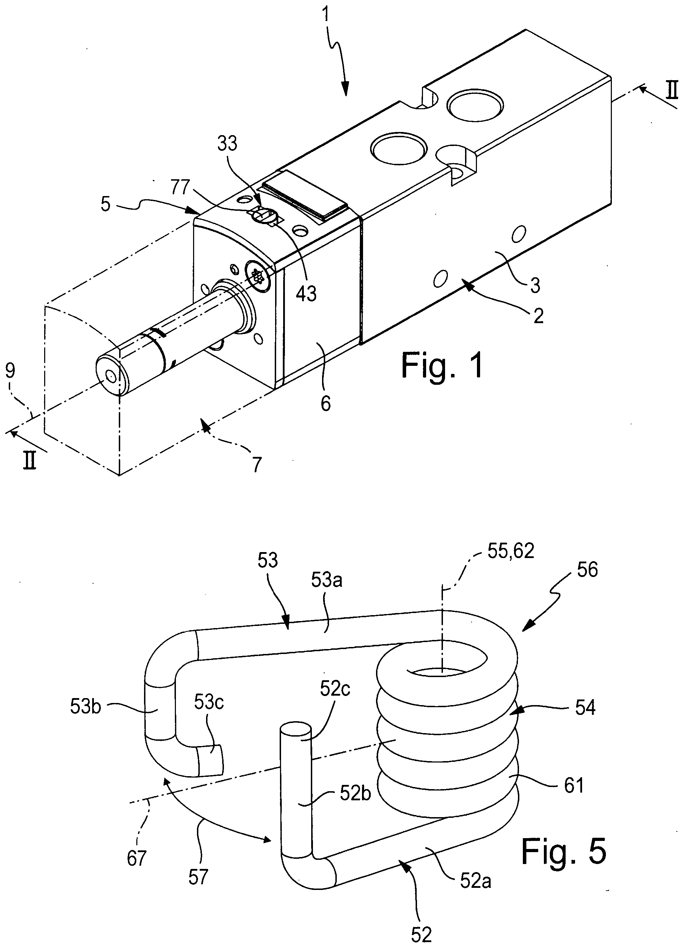

Die beiden Federschenkel 52, 53 sind in der mit der Schwenkrichtung zusammenfallenden Umfangsrichtung der Schwenkachse 55 mit Abstand zueinander angeordnet. Der in der Umfangsrichtung der Schwenkachse 55 gemessene Abstand zwischen den beiden Federschenkeln 52, 53 nimmt im demontierten Neutralzustand der Rückstellfeder 56, der aus Figur 5 hervorgeht, einen Maximalwert ein. Die beiden Federschenkel 52, 53 lassen sich im Rahmen der Schwenkbewegung 57 aneinander annähern, wobei der Verbindungsabschnitt 54 federelastisch verformt wird und sich dadurch eine rückstellende Federkraft aufbaut, die danach trachtet, die beiden Federschenkel 52, 53 wieder in die spannungsneutrale Ausgangsstellung zurückzubewegen.

Bevorzugt ist die Rückstellfeder 56 als eine Schenkelfeder ausgebildet, bei der der Verbindungsabschnitt 54 nach Art einer Schraubenfeder gewunden ist, was die Figur 5 gut illustriert. Bevorzugt besteht die als Schenkelfeder konzipierte Rückstellfeder 56 aus einem einstückigen Federdrahtkörper 61, der bevorzugt aus einem Federstahl hergestellt ist und der im Bereich des Verbindungsabschnittes 54 schraubenwendelförmig gebogen ist. An beiden axialen Endabschnitten des derart gewundenen Verbindungsabschnittes 54 schließt sich einer der quer von der Schwenkachse 55 wegragenden Federschenkel 52, 53 an. Die Schwenkachse 55 fällt vorzugsweise mit der Längsachse 62 des eine Helixform aufweisenden Verbindungsabschnittes 54 zusammen. Die beiden Federschenkel 52, 53 ragen zweckmäßigerweise an in der Umfangsrichtung der Längsachse 62 um 180° zueinander versetzten Bereichen rechtwinkelig zu der Längsachse 62 von dem Verbindungsabschnitt 54 weg.

Jeder Federschenkel 52, 53 hat zweckmäßigerweise einen ersten Längenabschnitt 52a, 53a der sich unmittelbar an den Verbindungsabschnitt 54 anschließt und der bevorzugt eine lineare Erstreckung hat. Der erste Längenabschnitt 52a, 53a ragt zweckmäßigerweise mit linearer Erstreckung vom Verbindungsabschnitt 54 weg, wobei sich seine Längsachse in einer zu der Längsachse des Verbindungsabschnittes 54 parallelen Ebene erstreckt.

Zweckmäßigerweise endet jeder Federschenkel 52, 53 mit einem sich einstückig an seinen ersten Längenabschnitt 52a, 53a anschließenden zweiten Längenabschnitt. 52b, 53b, der bezüglich des jeweils zugeordneten ersten Längenabschnittes 52a, 53a in einer zur Schwenkebene rechtwinkeligen Ebene umgebogen ist. Dabei erstreckt sich der umgebogene zweite Längenabschnitt 52b, 53b zweckmäßigerweise in Achsrichtung der Schwenkachse 55. Der zweite Längenabschnitt 52b des ersten Federschenkels 52 weist dabei in Richtung zu demjenigen axialen Endbereich des Verbindungsabschnittes 54, von dem der zweite Federschenkel 53 wegragt, und der zweite Längenabschnitt 53b des zweiten Federschenkels 53 weist in Richtung zu demjenigen axialen Endbereich des Verbindungsabschnittes 54, von dem der erste Federschenkel 52 wegragt.

Aus noch zu erläuternden Gründen ist der zweite Längenabschnitt 53b des zweiten Federschenkels 53 zweckmäßigerweise an seinem freien Ende nochmals umgebogen, sodass sein Endabschnitt 53c mit seiner Stirnfläche zurück in Richtung zum Verbindungsabschnitt 54 weist. Der zweite Längenabschnitt 53b des zweiten Federschenkels 53 hat somit zumindest im Wesentlichen eine U-förmige Gestalt.

Bei dem zweiten Längenabschnitt 52b des ersten Federschenkels 52 fehlt der zweite Biegebereich, sodass dieser zweite Längenabschnitt 52b zweckmäßigerweise im Wesentlichen L-förmig ausgeführt ist und sein Endabschnitt 52c mit seiner Stirnfläche in der Achsrichtung der Schwenkachse 55 beziehungsweise der Längsachse 62 orientiert ist.

Die beiden zweiten Längenabschnitte 52b, 53b überlappen sich in der Achsrichtung der Längsachse 62. Beide erstrecken sich zweckmäßigerweise auf gleicher axialer Höhe mit dem Verbindungsabschnitt 54.

Bei einem nicht gezeigten alternativen Ausführungsbeispiel ist die Rückstellfeder 56 als eine gebogene Blattfeder ausgebildet. Hier sind dann die beiden Federschenkel über einen ungewundenen einfachen bogenförmigen Verbindungsabschnitt 54 einstückig miteinander verbunden. Eine solche gebogene Blattfeder hat insbesondere eine zumindest im Wesentlichen U-förmige Gestalt, wobei die Federschenkel je nach relativer Schwenkposition einen mehr oder weniger großen Winkel zwischen sich einschließen können.

Auch bei der Rückstellfeder 56 des Ausführungsbeispiels verändert sich beim zueinander relativen Verschwenken der Federschenkel 52, 53 der zwischen den beiden Federschenkeln 52, 53 eingeschlossene, in der Umfangsrichtung der Schwenkachse 55 beziehungsweise der Längsachse 62 gemessene Winkel. Der eingeschlossene Winkel ist umso kleiner, je weiter die beiden Federschenkel 52, 53 unter zunehmendem Vorspannungsaufbau zueinander verschwenkt sind.

Die Rückstellfeder 56 ist derart angeordnet, dass ihre Schwenkachse rechtwinkelig zur Verschiebeachse 36 des Betätigungsstößels 34 ausgerichtet ist. Dabei ist diese Schwenkachse 55 gleichzeitig mit Abstand zu der Verschiebeachse 36 angeordnet. Außerdem stützt sich der erste Federschenkel 52 an dem Grundkörper 6 ab, während sich der zweite Federschenkel 53 an dem Betätigungsstößel 34 abstützt. Der zweite Federschenkel 53 verfügt innerhalb des Grundkörpers 6 über ausreichend Bewegungsspielraum, um die Verschiebebewegung 31 des Betätigungsstößels 34 unter Ausführung der schon erwähnten Schwenkbewegung 57 mitzumachen.

Eine Verschiebebewegung des Betätigungsstößels 34 hat also eine Schwenkbewegung 57 des zweiten Federschenkels 53 bezüglich des ortsfest am Grundkörper 6 fixierten ersten Federschenkels 52 zur Folge, wobei sich - in Achsrichtung der Schwenkachse 55 betrachtet - der Winkel und Abstand zwischen den beiden Federschenkeln 52, 53 verändern. Die Schwenkbewegung des sich am Betätigungsstößel 34 abstützenden zweiten Federschenkels 53 verläuft in einer Schwenkebene, die parallel zu der Verschiebeachse 36 ausgerichtet ist.

Die Federaufnahmekammer 46 hat in einer bevorzugten, beim Ausführungsbeispiel realisierten Ausgestaltung einen mit radialem Abstand zur Längsachse 36a neben der Stößelaufnahmeausnehmung 35 angeordneten Kopfabschnitt 46a und zwei von dem Kopfabschnitt 46a ausgehende und sich in Richtung zur Stößelaufnahmeausnehmung 35 erstreckende erste und zweite Schenkelaufnahmeabschnitte 46b, 46c. Der erste Schenkelaufnahmeabschnitt 46b ist mit größerem Abstand zu der ersten Außenfläche 20 angeordnet als der zweite Schenkelaufnahmeabschnitt 46c. Die Rückstellfeder 56 ist derart in der Federaufnahmekammer 46 angeordnet, dass ihr Verbindungsabschnitt 54 in dem Kopfabschnitt 46a sitzt, während sich der erste Federschenkel 52 in den ersten Schenkelaufnahmeabschnitt 46b und der zweite Federschenkel 53 in den zweiten Schenkelaufnahmeabschnitt 46c hineinerstreckt.

Die beiden Schenkelaufnahmeabschnitte 46b, 46c sind zweckmäßigerweise durch eine vom Grundkörper 6 gebildete Trennwand 63 voneinander abgeteilt.

Der erste Schenkelaufnahmeabschnitt 46b endet an der dem Kopfabschnitt 46a entgegengesetzten Seite mit Abstand vor der Stößelaufnahmeausnehmung 35. Die in Achsrichtung der Verschiebeachse 36 gemessene Höhe des zweiten Schenkelaufnahmeabschnittes 46c ist zumindest partiell und zweckmäßigerweise über die gesamte Länge des zweiten Schenkelaufnahmeabschnittes 46c derart auf die Dicke des ersten Federschenkels 52 abgestimmt, dass selbiger in der Achsrichtung der Verschiebeachse 36 zumindest im Wesentlichen spielfrei in dem ersten Schenkelaufnahmeabschnitt 46b aufgenommen ist. Somit wird der erste Federschenkel 52 von den sich in Achsrichtung der Verschiebeachse 36 gegenüberliegenden Wandflächen des ersten Schenkelaufnahmeabschnittes 46b relativ zum Grundkörper 6 unbeweglich abgestützt. Damit wird erreicht, dass die Schwenkbewegung 57 bezüglich des Grundkörpers 6 nur von dem am Betätigungsstößel 34 angreifenden zweiten Federschenkel 53 ausgeführt werden kann.

Der zweite Schenkelaufnahmeabschnitt 46c erstreckt sich bis hin zu der Stößelaufnahmeausnehmung 35 und mündet in dem Mündungsbereich 48 umfangsseitig in die Stößelaufnahmeausnehmung 35 ein. Der zweite Federschenkel 53, der in der zur Schwenkachse 55 rechtwinkeligen Ebene weiter von dem Verbindungsabschnitt 54 wegragt als der erste Federschenkel 53, greift durch den Mündungsabschnitt 48 hindurch und ragt von der Seite her in die Stößelaufnahmeausnehmung 35 hinein. Dort stützt er sich mit seinem Endbereich in Achsrichtung der Verschiebebewegung 31 zumindest in der Richtung der unbetätigten Stellung des Betätigungsstößels 34 an dem Betätigungsstößel 34 ab, vorzugsweise mit seinem bezüglich des ersten Längenabschnittes 53a umgebogenen zweiten Längenabschnitt 53b.

Der zweite Schenkelaufnahmeabschnitt 46c hat in der Achsrichtung der Verschiebebewegung 31 eine ausreichende Höhe, um dem zweiten Federschenkel 53 den notwendigen Spielraum zur Ausführung der Schwenkbewegung 57 zu verleihen.

Zweckmäßigerweise ist der Betätigungsstößel 34 peripher mit einer Abstütznut 64 versehen, bei der es sich zweckmäßigerweise um eine sich konzentrisch um die Längsachse 36a herum erstreckende Ringnut handelt und in die der zweite Federschenkel 53 mit seinem dem Verbindungsabschnitt 54 entgegengesetzten Endbereich eintaucht. Dabei bildet die dem inneren Endabschnitt 35b der Stößelaufnahmeausnehmung 35 zugewandte Nutflanke der Abstütznut 64 eine Abstützfläche 65, an der der zweite Federschenkel 53 mit Vorspannung anliegt. Wird der Betätigungsstößel 34 durch drückende Beaufschlagung des Betätigungsabschnittes 43 nach axial innen in der Stößelaufnahmeausnehmung 35 verschoben, wird der zweite Federschenkel 53 an seinem von der Abstützfläche 65 beaufschlagten Endabschnitt mitgenommen und unter federelastischer Verformung des Verbindungsabschnittes 54, die mit einem zunehmendem Aufbau einer federelastischen Rückstellkraft verbunden ist, in Richtung zum ersten Federschenkel 52 verschwenkt, bis der Betätigungsstößel 34 in der betätigten Stellung positioniert ist. Dies ist aus Figur 4 gut ersichtlich.

Wird anschließend die auf den Betätigungsabschnitt 43 einwirkende Drückkraft wieder weggenommen, wird der Betätigungsstößel 34 durch den zurückschwenkenden und auf die Abstützfläche 65 einwirkenden zweiten Federschenkel 53 in die unbetätigte Stellung zurückgeschoben, wobei der zweite Federschenkel 53 in seine unausgelenkte Grundstellung zurückkehrt.

Diese unausgelenkte Grundstellung des zweiten Federschenkels 53 ist zweckmäßigerweise durch eine am Grundkörper 6 angeordnete Anschlagfläche 66 vorgegeben. Diese Anschlagfläche 66 ist zweckmäßigerweise eine von der ersten Außenfläche 20 wegweisende Innenfläche des zweiten Schenkelaufnahmeabschnittes 46c.

Bevorzugt sind die beiden Federschenkel 52, 53 in der unausgelenkten Grundstellung gemäß Figur 2 bereits zumindest geringfügig gegeneinander vorgespannt. Die Vorspannung ergibt sich dadurch, dass die beiden Federschenkel 52, 53 in dem aus Figur 5 ersichtlichen spannungsneutralen Zustand weiter auseinandergespreizt sind als in dem in die Federaufnahmekammer 46 eingesetzten Zustand. Die Federaufnahmekammer 46 hat insgesamt eine derartige Höhe, dass sich die Rückstellfeder 56 nur mit zueinander verschwenkten und dadurch relativ zueinander vorgespannten Federschenkeln 52, 53 in die Federaufnahmekammer 46 einsetzen lässt.

Zweckmäßigerweise ist die Rückstellfeder 56 so in dem Grundkörper 6 angeordnet, dass zumindest einer und bevorzugt jeder der beiden Federschenkel 52, 53 in der unausgelenkten Grundstellung, wenn der Betätigungsstößel 34 die unbetätigte Stellung einnimmt, sich in einer zu der Verschiebeachse 36 zumindest im Wesentlichen rechtwinkeligen Ebene erstreckt. Dies trifft auf das Ausführungsbeispiel zu.

Weiterhin ist es vorteilhaft, wenn eine imaginäre Hauptachse 67 der Rückstellfeder 56, die rechtwinkelig zu der Schwenkachse 55 verläuft, sich zumindest im unbetätigten Zustand des Betätigungsstößels 34 zwischen den beiden Federschenkeln 52, 53 hindurch erstreckt.

Die Abstützfläche 65 ist zweckmäßigerweise ein Bestandteil des Betätigungsabschnittes 43 des Betätigungsstößels 34. Vorteilhaft ist es, wenn die Rückstellfeder 56 mit Bezug zur Achsrichtung der Verschiebeachse 36 auf gleicher Höhe mit dem Betätigungsstößel 34 neben dem Betätigungsstößel 34 angeordnet ist.

Die beim Ausführungsbeispiel realisierte liegende Anordnung der Rückstellfeder 56, bei der sich die Längsachse 47 der Federaufnahmekammer 46 rechtwinkelig zu der Verschiebeachse 36 erstreckt, ermöglicht in Achsrichtung der Verschiebeachse 36 die Einhaltung besonders geringer Höhenabmessungen des Grundkörpers 6.

Bevorzugt erstreckt sich die Federkammer 46 in einem Bereich des Grundkörpers 6, der radial neben der Ventilkammer 26 des Hauptventils 2 liegt. Auf diese Weise wirkt sich die Rückstellfeder 56 auf die in Achsrichtung der Längsachse 9 gemessenen Längenabmessungen der Ventileinrichtung 1 nicht aus. Die Federaufnahmekammer 46 und die Ventilkammer 26 überlappen sich also zweckmäßigerweise in der Längsrichtung der Ventileinrichtung 1.

Der erste Federschenkel 52 ragt zweckmäßigerweise weniger weit von dem Verbindungsabschnitt 54 weg als der mit dem Betätigungsstößel 34 zusammenwirkende zweite Federschenkel 53. Auf diese Weise kann der erste Federschenkel 52 außerhalb der Stößelaufnahmeausnehmung 35 enden.

Die der Abstützfläche 65 gegenüberliegende und zu der ersten Außenfläche 20 weisende Nutflanke der Abstütznut 64 bildet zweckmäßigerweise eine weitere Abstützfläche 68, mit der sich der Betätigungsstößel 34 in nach axial außen orientierter Richtung an dem zweiten Federschenkel 53 abstützt. Dadurch wird der Betätigungsstößel 34 unmittelbar und ausschließlich durch den an ihm angreifenden zweiten Federschenkel 53 formschlüssig an einem Herausfallen aus der Stößelaufnahmeausnehmung 35 gehindert. Der dem Verbindungsabschnitt 54 entgegengesetzte Endbereich des zweiten Federschenkels 53, insbesondere dessen zweiter Längenabschnitt 53b, übernimmt also die Funktion des weiter oben angesprochenen Sicherungsgliedes 45. Somit ist der Betätigungsstößel 34 in beide Erstreckungsrichtungen der Verschiebeachse 36 an dem zweiten Federschenkel 53 abgestützt.

Zweckmäßigerweise verfügt die Federaufnahmekammer 46 an ihrer der Stößelaufnahmeausnehmung 35 entgegengesetzten Seite über eine Montageöffnung 69, durch die hindurch die Rückstellfeder 56 beim Zusammenbau der Ventileinrichtung 1 in die Federaufnahmekammer 46 einsetzbar ist. Die Montageöffnung 69 ist im zusammengebauten Zustand der Ventileinrichtung 1 zweckmäßigerweise durch einen Abschnitt des Hauptventilgehäuses 3 verschlossen. Dadurch wird die Rückstellfeder 56 durch das Hauptventilgehäuse 3 gehalten und es erübrigen sich separate Haltemittel zur Fixierung der Rückstellfeder 56.

Die Nutzung der Rückstellfeder 56 als Sicherungsglied 45 zum Festhalten des Betätigungsstößels 34 in der Stößelaufnahmeausnehmung 35 ermöglicht es, auf zusätzlich zu der Rückstellfeder 56 vorhandene Sicherungsmittel zu verzichten. Dies vereinfacht den Aufbau der Ventileinrichtung 1. Es ist gleichwohl möglich, das Herausfallen des Betätigungsstößels 34 aus der Stößelaufnahmeausnehmung 35 durch andere Sicherungsmittel als die Rückstellfeder 56 zu verhindern. In diesem Fall kann auf die Ausbildung der Abstütznut 64 verzichtet werden und es genügt, den Betätigungsstößel 34 derart abgestuft zu konturieren, dass er eine axial orientierte, als Abstützfläche 65 wirkende Fläche aufweist. Die weitere Abstützfläche 68 kann dann entfallen.

Die Verschiebeachse 36 des Betätigungsstößels 34 ist zweckmäßigerweise rechtwinkelig zur Bewegungsrichtung der Umschaltbewegung 12 des Ventilgliedes 8 ausgerichtet.

Bisher wurde erläutert, wie das Ventilglied 8 durch eine tastende Betätigung des Betätigungsstößels 34 bei Bedarf vorübergehend aus der ersten in die zweite Schaltstellung umschaltbar ist. Vorzugsweise ist die Handhilfsbetätigungseinrichtung 33 jedoch darüber hinaus so ausgestaltet, dass der Betätigungsstößel 34 in seiner betätigten Stellung bei Bedarf mechanisch lösbar blockierbar ist, sodass er auch bei Wegnahme der manuell aufgebrachten Betätigungskraft in der betätigten Stellung verbleibt. Dadurch kann das Ventilglied 8 für beliebig lange Zeit ohne Nutzung der elektrischen Antriebseinrichtung 7 in der zweiten Schaltstellung gehalten werden. Die Handhilfsbetätigungseinrichtung 33 des Ausführungsbeispiels ist in diesem Sinne ausgelegt.

Um das Blockieren der betätigten Stellung zu ermöglichen, kann der Betätigungsabschnitt 43 und folglich der Betätigungsstößel 34 bei Einnahme seiner betätigten Stellung zwischen einer das axiale Verschieben des Betätigungsstößels 34 ermöglichenden Freigabestellung und einer dieses axiale Verschieben relativ zum Grundkörper 6 verhindernden Blockierstellung verdreht werden. Diese Drehbewegung, deren Drehachse mit der Verschiebeachse 36 zusammenfällt, ist in der Zeichnung bei 72 durch einen Doppelpfeil angedeutet.

Die geschilderte Blockierfunktion wird zweckmäßigerweise dadurch ermöglicht, dass der Betätigungsstößel 34 an seinem Außenumfang mindestens einen radial abstehenden Blockiervorsprung 73 aufweist, wobei exemplarisch zwei solche Blockiervorsprünge 73 an einander diametral entgegengesetzten Umfangsseiten des Betätigungsstößels 34 angeordnet sind. Die Blockiervorsprünge 73 befinden sich zweckmäßigerweise an dem Betätigungsabschnitt 43 und vorzugsweise axial außerhalb der Abstützfläche 65.

Wenn der Betätigungsstößel 34 die Freigabestellung einnimmt, greift jeder Blockiervorsprung 73 in eine sich axial erstreckende Längsnut 74 ein, die in die periphere Innenumfangsfläche der Stößelaufnahmeausnehmung 35 eingebracht ist und sich parallel zu der Verschiebeachse 36 erstreckt. Befindet sich der Betätigungsstößel 34 in der Freigabestellung, können die Blockiervorsprünge 73 in der jeweils zugeordneten Längsnut 74 ungehindert entlanggleiten, wenn der Betätigungsstößel 34 die Verschiebebewegung 31 ausführt.

Die Stößelaufnahmeausnehmung 35 ist in einem Bereich, der in der betätigten Stellung des Betätigungsstößels 34 auf gleicher Höhe mit den Blockiervorsprüngen 73 liegt, für jeden Blockiervorsprung 73 mit einer Wandaussparung 75 versehen, die an der näher zur ersten Außenfläche 20 liegenden Seite von einer Blockierfläche 76 begrenzt ist, die von der ersten Außenfläche 20 abgewandt ist. Ist der Betätigungsstößel 34 in die betätigte Stellung verschoben, kann er im Rahmen der Drehbewegung 72 so verdreht werden, dass jeder Blockiervorsprung 73 in eine der Wandaussparungen 75 eingreift und dadurch axial vor der zugeordneten Blockierfläche 76 zu liegen kommt. Auf diese Weise stützt sich der Betätigungsstößel 34 mit seinen Blockiervorsprüngen 73 in Richtung zu der unbetätigten Stellung am Grundkörper 6 ab und verharrt in der betätigten Stellung, obwohl er durch den zweiten Federschenkel 53 ständig in Richtung der unbetätigten Stellung mit einer Federkraft beaufschlagt ist.

Zum Zurückstellen in die unbetätigte Stellung genügt es, derart auf den Betätigungsabschnitt 43 einzuwirken, dass der Betätigungsstößel 34 zurückgedreht wird und seine Blockiervorsprünge 73 wieder im Bereich der Längsnuten 74 zu liegen kommen, sodass der Betätigungsstößel 34 nicht mehr blockiert ist und durch die rückstellende Federkraft der Rückstellfeder 56 in die unbetätigte Stellung zurückgeschoben wird.

Um die Drehbewegung 72 zu erleichtern, ist es vorteilhaft, wenn der Betätigungsstößel 34 an der axial nach außen weisenden Stirnfläche einen geeigneten Drehbetätigungsabschnitt 77 aufweist. Dieser Drehbetätigungsabschnitt 77 ist insbesondere so ausgebildet, dass er das Ansetzen eines zur Einleitung eines Drehmoments geeigneten Werkzeuges gestattet, beispielsweise eines Schraubendrehers. Der Drehbetätigungsabschnitt 77 kann insbesondere ein Schlitz sein.

Beim Ausführungsbeispiel ist eine der beiden vorhandenen Wandaussparungen 75 unmittelbar vom Mündungsbereich 48 der Federaufnahmekammer 46 gebildet, wobei die Anschlagfläche 66, die in der unbetätigten Stellung des Betätigungsstößels 34 mit dem zweiten Federschenkel 53 zusammenwirkt, in der betätigten Stellung des Betätigungsstößels 34 die Funktion einer der Blockierflächen 76 übernimmt. Auf diese Weise erspart man sich die Ausbildung einer separaten, nur für den Blockiervorgang genutzten Wandaussparung.

Der zweite Federschenkel 53 greift zweckmäßigerweise mit einem sich parallel zu der Längsachse 62 des Verbindungsabschnittes 54 erstreckenden Abschnitt seines zweiten Längenabschnittes 53b in die Abstütznut 64 ein. Dadurch, dass der zweite Federschenkel 53 mit einem zurückgebogenen Endabschnitt 53c endet, wird verhindert, dass der zweite Federschenkel 53 bei der Schwenkbewegung 57 mit der seine Stirnfläche begrenzenden Kante an der Seitenwand der Federaufnahmekammer 46 entlangschabt.

## Patentansprüche

1. Ventileinrichtung, mit mindestens einem elektrisch betätigbaren Steuerventil (5), das ein durch elektrische Ansteuerung zwischen einer ersten und einer zweiten Schaltstellung relativ zu einem Grundkörper (6) verlagerbares Ventilglied (8) aufweist, dem eine zur Ventileinrichtung (1) gehörende Handhilfsbetätigungseinrichtung (33) zugeordnet ist, die einen relativ zu dem Grundkörper (6) des Steuerventils (5) in Achsrichtung einer imaginären Verschiebeachse (36) verschiebbaren Betätigungsstößel (34) aufweist, der durch manuelle Beaufschlagung eines Betätigungsabschnittes (43) entgegen der Kraft einer Rückstellfeder (56) der Ventileinrichtung (1) aus einer unbetätigten Stellung in eine betätigte Stellung verschiebbar ist, um mit einem Antriebsabschnitt (44) auf das Ventilglied (8) einzuwirken und dieses aus der ersten Schaltstellung in die zweite Schaltstellung zu verlagern, **dadurch gekennzeichnet, dass** die Rückstellfeder (56) zwei durch einen Verbindungsabschnitt (54) einstückig miteinander verbundene und unter elastischer Verformung des Verbindungsabschnittes (54) um eine zu der Verschiebeachse (36) des Betätigungsstößels (34) rechtwinkelige und beabstandete Schwenkachse (55) relativ zueinander verschwenkbare Federschenkel (52, 53) aufweist, von denen sich der eine (52) an dem Grundkörper (6) und der andere (53) an dem Betätigungsstößel (34) abstützt.

2. Ventileinrichtung nach Anspruch 1, **dadurch gekennzeichnet, dass** sich wenigstens einer und zweckmäßigerweise jeder der beiden Federschenkel (52, 53) in der unbetätigten Stellung des Betätigungsstößels (34) in einer zu der Verschiebeachse (36) zumindest im Wesentlichen rechtwinkeligen Ebene erstreckt.

3. Ventileinrichtung nach Anspruch 1 oder 2, **dadurch gekennzeichnet, dass** die Rückstellfeder (56) eine zur Schwenkachse (55) rechtwinkelige, sich zumindest im unbetätigten Zustand des Betätigungsstößels (34) zwischen den beiden Federschenkeln (52, 53) erstreckende imaginäre Hauptachse (67) besitzt und derart angeordnet ist, dass diese Hauptachse (67) quer und insbesondere zumindest im Wesentlichen rechtwinkelig zur Verschiebeachse (36) des Betätigungsstößels (34) ausgerichtet ist.

4. Ventileinrichtung nach einem der Ansprüche 1 bis 3, **dadurch gekennzeichnet, dass** die Rückstellfeder (56) mit Bezug zur Achsrichtung der Verschiebeachse (36) des Betätigungsstößels (34) auf gleicher Höhe mit dem Betätigungsstößel (34) neben dem Betätigungsstößel (34) in dem Grundkörper (6) angeordnet ist.

5. Ventileinrichtung nach einem der Ansprüche 1 bis 4, **dadurch gekennzeichnet, dass** die Rückstellfeder (56) quer zu der Verschiebeachse (36) des Betätigungsstößels (34) neben dem Betätigungsstößel (34) angeordnet ist, wobei sich die beiden Federarme (52, 53) ausgehend von dem beabstandet zum Betätigungsstößel (34) angeordneten Verbindungsabschnitt (54) der Rückstellfeder (56) in Richtung zu dem Betätigungsstößel (34) erstrecken.

6. Ventileinrichtung nach einem der Ansprüche 1 bis 5, **dadurch gekennzeichnet, dass** die Rückstellfeder (56) in einer sich quer und insbesondere rechtwinkelig zu einer den Betätigungsstößel (34) aufnehmenden Stößelaufnahmeausnehmung (35) erstreckenden und in die Stößelaufnahmeausnehmung (35) einmündende Federaufnahmekammer (46) des Grundkörpers (6) aufgenommen ist.

7. Ventileinrichtung nach Anspruch 6, **dadurch gekennzeichnet, dass** die Federaufnahmekammer (46) einen den Verbindungsabschnitt (54) aufnehmenden Kopfabschnitt (46a) und zwei von dem Kopfabschnitt (46a) ausgehende, durch eine Trennwand (63) des Grundkörpers (6) voneinander abgeteilte und jeweils einen der Federschenkel (52, 53) aufnehmende Schenkelaufnahmeabschnitte (46b, 46c) aufweist, wobei zweckmäßigerweise der sich am Grundkörper (6) abstützende Federschenkel (53) in dem ihn aufnehmenden Schenkelaufnahmeabschnitt (46c) in der Umfangsrichtung der Schwenkachse (55) beidseits abgestützt ist, derart, dass bei der Betätigung des Betätigungsstößels (34) nur der sich am Betätigungsstößel (34) abstützende Federschenkel (52) relativ zum Grundkörper (6) verschwenkt wird.

8. Ventileinrichtung nach einem der Ansprüche 1 bis 7, **dadurch gekennzeichnet, dass** der sich am Grundkörper (6) abstützende Federschenkel (53) bezogen auf die Achsrichtung der Verschiebeachse (36) des Betätigungsstößels (34) näher bei dem Antriebsabschnitt (44) des Betätigungsstößels (34) liegt als der sich am Betätigungsstößel (34) abstützende Federschenkel (53).

9. Ventileinrichtung nach einem der Ansprüche 1 bis 8, **dadurch gekennzeichnet, dass** der sich am Grundkörper (6) abstützende Federschenkel (52) weniger weit vom Verbindungsabschnitt (54) der Rückstellfeder (56) wegragt als der sich am Betätigungsstößel (34) abstützende Federschenkel (53).

10. Ventileinrichtung nach einem der Anspruch 1 bis 9, **dadurch gekennzeichnet, dass** der Betätigungsstößel (34) im Bereich seines Außenumfanges eine dem Antriebsabschnitt zugewandte axiale Abstützfläche aufweist, an der der sich am Betätigungsstößel (34) abstützende Federschenkel der Rückstellfeder (56) anliegt.

11. Ventileinrichtung nach einem der Ansprüche 1 bis 10, **dadurch gekennzeichnet, dass** der Betätigungsstößel (34) eine periphere, bevorzugt als Ringnut ausgebildete Abstütznut (64) aufweist, in die der sich am Betätigungsstößel (34) abstützende Federschenkel (53) eintaucht, zweckmäßigerweise mit einem umgebogenen, sich parallel zu der Schwenkachse (55) erstreckenden Endabschnitt.

12. Ventileinrichtung nach einem der Ansprüche 1 bis 11, **dadurch gekennzeichnet, dass** die Rückstellfeder (56) als eine Schenkelfeder mit einem nach Art einer Schraubenfeder gewundenen Verbindungsabschnitt (54) ausgebildet ist.

13. Ventileinrichtung nach einem der Ansprüche 1 bis 12, **dadurch gekennzeichnet, dass** der Betätigungsstößel (34) in der betätigten Stellung lösbar blockierbar ist, um das Ventilglied (8) durch ständige Beaufschlagung in der zweiten Schaltstellung zu halten, wobei zweckmäßigerweise der Betätigungsabschnitt (43) in der betätigten Stellung des Betätigungsstößels (34) zwischen einer das axiale Verschieben zwischen der unbetätigten und der betätigten Stellung ermöglichenden Freigabestellung und einer das axiale Verschieben zwischen der unbetätigten Stellung und der betätigten Stellung verhindernden Blockierstellung verdrehbar ist.

14. Ventileinrichtung nach einem der Ansprüche 1 bis 13, **dadurch gekennzeichnet, dass** das Ventilglied (8) in der ersten Schaltstellung an einem Ventilsitz (18) anliegt und in der zweiten Stellung gegen eine Federkraft von dem Ventilsitz (18) abgehoben ist, und/oder dass die Verschiebeachse (36) des Betätigungsstößels (34) rechtwinkelig zur Bewegungsrichtung des Ventilgliedes (8) verläuft.

15. Ventileinrichtung nach einem der Ansprüche 1 bis 14, **dadurch gekennzeichnet, dass** das Steuerventil (5) ein Magnetventil ist, und/oder dass die Ventileinrichtung (1) ein fluidisch betätigbares Hauptventil (2) aufweist, an dem mindestens ein mit der Handhilfsbetätigungseinrichtung (33) ausgestattetes, elektrisch betätigbares Steuerventil (5) als Vorsteuerventil angeordnet ist.

## Claims

1. Valve device with at least one electrically actuable control valve (5), which has a valve member (8) movable by electrical activation relative to a base body (6) between a first and a second switching position and to which is assigned a manual auxiliary actuating device (33) belonging to the valve device (1) and having an actuating plunger (34) displaceable relative to the base body (6) of the control valve (5) in the axial direction of an imaginary displacement axis (36) and which may be displaced by manual application of pressure of an actuating section (43), against the force of a resetting spring (56) of the valve device (1), from an unactuated position into an actuated position, in order to act with a drive section (44) on the valve member (8) and to shift the latter from the first switching position into the second switching position, **characterised in that** the resetting spring (56) has two spring arms (52, 53), joined together into one piece by a connecting section (54), and pivotable relative to one another under elastic deformation of the connecting section (54) around a swivel axis (55) perpendicular to and with clearance from the displacement axis (36) of the actuating plunger (34), with one (52) resting on the base body (6) and the other (53) resting on the actuating plunger (34).

2. Valve device according to claim 1, **characterised in that** at least one and expediently each of the two spring arms (52, 53), in the unactuated position of the actuating plunger (34), extends in a plane which is at least substantially perpendicular to the displacement axis (36).

3. Valve device according to claim 1 or 2, **characterised in that** the resetting spring (56) has an imaginary main axis (67), perpendicular to the swivel axis (55), extending at least in the unactuated state of the actuating plunger (34) between the two spring arms (52, 53), and is so arranged that this main axis (67) is aligned perpendicular and in particular at least substantially at right-angles to the displacement axis (36) of the actuating plunger (34).

4. Valve device according to any of claims 1 to 3, **characterised in that** the resetting spring (56), with respect to the axial direction of the displacement axis (36) of the actuating plunger (34), is arranged in the base body (6) at the same height as the actuating plunger (34) and next to the actuating plunger (34).

5. Valve device according to any of claims 1 to 4, **characterised in that** the resetting spring (56) is arranged perpendicular to the displacement axis (36) of the actuating plunger (34) and next to the actuating plunger (34), wherein the two spring arms (52, 53) extend towards the actuating plunger (34), starting from the connecting section (54) of the resetting spring (56) arranged with clearance from the actuating plunger (34).

6. Valve device according to any of claims 1 to 5, **characterised in that** the resetting spring (56) is held in a spring holding chamber (46) of the base body (6) extending perpendicular and in particular at right-angles to a plunger holding recess (35) holding the actuating plunger (34) and leading into the plunger holding recess (35).

7. Valve device according to claim 6, **characterised in that** the spring holding chamber (46) has one head section (46a) holding the connecting section (54) and two arm holding sections (46b, 46c) emanating from the head section (46a), separated from one another by a partition wall (63) of the base body (6) and each holding one of the spring arms (52, 53), wherein expediently the spring arm (53) resting on the base body (6) is supported in the arm holding section (46c) which supports it, on either side in the circumferential direction of the swivel axis (55), in such a way that, on actuation of the actuating plunger (34), only the spring arm (52) resting on the actuating plunger (34) is pivoted relative to the base body (6).

8. Valve device according to any of claims 1 to 7, **characterised in that** the spring arm (53) resting on the base body (6), relative to the axial direction of the displacement axis (36) of the actuating plunger (34), lies closer to the drive section (44) of the actuating plunger (34) than the spring arm (53) resting on the actuating plunger (34).

9. Valve device according to any of claims 1 to 8, **characterised in that** the spring arm (52) resting on the base body (6), extends away less far from the connecting section (54) of the resetting spring (56) than the spring arm (53) resting on the actuating plunger (34).

10. Valve device according to any of claims 1 to 9, **characterised in that** the actuating plunger (34) has in the area of its outer periphery an axial support surface facing the drive section and with which the spring arm of the resetting spring (56) resting on the actuating plunger (34) makes contact.

11. Valve device according to any of claims 1 to 10, **characterised in that** the actuating plunger (34) has a peripheral support slot (64), preferably in the form of an annular slot, into which the spring arm (53) resting on the actuating plunger (34) dips, expediently with a bent end section extending parallel to the swivel axis (55).

12. Valve device according to any of claims 1 to 11, **characterised in that** the resetting spring (56) is in the form of a leg spring with a connecting section (54) wound in the manner of a coil spring.

13. Valve device according to any of claims 1 to 12, **characterised in that** the actuating plunger (34) in the actuated position is releasably locked, in order to hold the valve member (8) through constant application of pressure in the second switching position, wherein the actuating section (43) in the actuated position of the actuating plunger (34) may be rotated between a release position allowing axial movement between the unactuated and the actuated position, and a locking position preventing axial movement between the unactuated and the actuated position.

14. Valve device according to any of claims 1 to 13, **characterised in that** the valve member (8) in the first switching position abuts a valve seat (18) and in the second position is lifted from the valve seat (18) against a spring force, and/or that the displacement axis (36) of the actuating plunger (34) runs at right-angles to the direction of movement of the valve member (8).

15. Valve device according to any of claims 1 to 14, **characterised in that** the control valve (5) is a solenoid valve, and/or that the valve device (1) has a fluidically actuable main valve (2), on which at least one electrically actuable control valve (5) equipped with the manual auxiliary actuating device (33) is provided as pilot valve.

## Revendications

1. Dispositif de soupape, avec au moins une soupape de commande (5) pouvant être actionnée de manière électrique, qui présente un organe de soupape (8) pouvant être déplacé par un pilotage électrique entre une première et une deuxième position de commutation par rapport à un corps de base (6), auquel un dispositif d'actionnement auxiliaire manuel (33) faisant partie du dispositif de soupape (1) est associé, qui présente un poussoir d'actionnement (34) pouvant être coulissé par rapport au corps de base (6) de la soupape de commande (5) dans la direction axiale d'un axe de coulissement (36) imaginaire, qui peut être coulissé depuis une position non actionnée dans une position actionnée par une sollicitation manuelle d'une section d'actionnement (43) à l'encontre de la force d'un ressort de rappel (56) du dispositif de soupape (1) pour agir avec une section d'entraînement (44) sur l'organe de soupape (8) et déplacer celui-ci depuis la première position de commutation dans la deuxième position de commutation, **caractérisé en ce que** le ressort de rappel (56) présente deux branches de ressort (52, 53) reliées entre elles d'un seul tenant par une section de liaison (54) et pouvant être pivotées l'une par rapport à l'autre autour d'un axe de pivotement (55) formant un angle droit par rapport à l'axe de coulissement (36) du poussoir d'actionnement (34) et espacé par rapport à celui-ci moyennant une déformation élastique de la section de liaison (54), dont une (52) prend appui au niveau du corps de base (6) et l'autre (53), au niveau du poussoir d'actionnement (34).

2. Dispositif de soupape selon la revendication 1, **caractérisé en ce qu'**au moins une et de manière appropriée chacune des deux branches de ressort (52, 53) s'étend, dans la position non actionnée du poussoir d'actionnement (34), dans un plan formant au moins sensiblement un angle droit par rapport à l'axe de coulissement (36).

3. Dispositif de soupape selon la revendication 1 ou 2, **caractérisé en ce que** le ressort de rappel (56) possède un axe principal (67) imaginaire formant un angle droit par rapport à l'axe de pivotement (55), s'étendant au moins dans l'état non actionné du poussoir d'actionnement (34) entre les deux branches de ressort (52, 53) et est disposé de telle manière que ledit axe principal (67) est orienté de manière transversale et en particulier au moins sensiblement à angle droit par rapport à l'axe de coulissement (36) du poussoir d'actionnement (34).

4. Dispositif de soupape selon l'une quelconque des revendications 1 à 3, **caractérisé en ce que** le ressort de rappel (56) est disposé, par rapport à la direction axiale de l'axe de coulissement (36) du poussoir d'actionnement (34), à une hauteur identique avec le poussoir d'actionnement (34) à côté du poussoir d'actionnement (34) dans le corps de base (6).

5. Dispositif de soupape selon l'une quelconque des revendications 1 à 4, **caractérisé en ce que** le ressort de rappel (56) est disposé de manière transversale par rapport à l'axe de coulissement (36) du poussoir d'actionnement (34) à côté du poussoir d'actionnement (34), dans lequel les deux bras de ressort (52, 53) s'étendent en partant de la section de liaison (54), disposée de manière espacée par rapport au poussoir d'actionnement (34), du ressort de rappel (56) en direction du poussoir d'actionnement (34).

6. Dispositif de soupape selon l'une quelconque des revendications 1 à 5, **caractérisé en ce que** le ressort de rappel (56) est logé dans une chambre de logement de ressort (46) du corps de base (6) s'étendant de manière transversale et en particulier à angle droit par rapport à un évidement de logement de poussoir (35) logeant le poussoir d'actionnement (34) et débouchant dans l'évidement de logement de poussoir (35).

7. Dispositif de soupape selon la revendication 6, **caractérisé en ce que** la chambre de logement de ressort (46) présente une section de tête (46a) logeant la section de liaison (54) et deux sections de logement de branche (46b, 46c) partant de la section de tête (46a), séparées l'une de l'autre par une paroi de séparation (63) du corps de base (6) et logeant respectivement une des branches de ressort (52, 53), dans lequel de manière appropriée la branche de ressort (53) prenant appui de part et d'autre au niveau du corps de base (6) prend appui dans la section de logement de branche (46c) la logeant dans la direction périphérique de l'axe de pivotement (55), de telle manière que lors de l'actionnement du poussoir d'actionnement (34), seulement la branche de ressort (52) prenant appui au niveau du poussoir d'actionnement (34) est pivotée par rapport au corps de base (6).

8. Dispositif de soupape selon l'une quelconque des revendications 1 à 7, **caractérisé en ce que** la branche de ressort (53) prenant appui au niveau du corps de base (6) se situe par rapport à la direction axiale de l'axe de coulissement (36) du poussoir d'actionnement (34) davantage à proximité de la section d'entraînement (44) du poussoir d'actionnement (34) que la branche de ressort (53) prenant appui au niveau du poussoir d'actionnement (34).

9. Dispositif de soupape selon l'une quelconque des revendications 1 à 8, **caractérisé en ce que** la branche de ressort (52) prenant appui au niveau du corps de base (6) dépasse de manière moins avancée de la section de liaison (54) du ressort de rappel (56) que la branche de ressort (53) prenant appui au niveau du poussoir d'actionnement (34).

10. Dispositif de soupape selon l'une quelconque des revendications 1 à 9, **caractérisé en ce que** le poussoir d'actionnement (34) présente dans la zone de sa périphérie extérieure une surface d'appui axiale tournée vers la section d'entraînement, au niveau de laquelle repose la branche de ressort prenant appui au niveau du poussoir d'actionnement (34) du ressort de rappel (56).

11. Dispositif de soupape selon l'une quelconque des revendications 1 à 10, **caractérisé en ce que** le poussoir d'actionnement (34) présente une rainure d'appui (64) périphérique, réalisée de manière préférée en tant que rainure annulaire, dans laquelle s'enfonce la branche de ressort (53) prenant appui au niveau du poussoir d'actionnement (34), de manière appropriée par une section d'extrémité repliée, s'étendant de manière parallèle à l'axe de pivotement (55).

12. Dispositif de soupape selon l'une quelconque des revendications 1 à 11, **caractérisé en ce que** le ressort de rappel (56) est réalisé en tant qu'un ressort à branches avec une section de liaison (54) enroulée à la manière d'un ressort hélicoïdal.

13. Dispositif de soupape selon l'une quelconque des revendications 1 à 12, **caractérisé en ce que** le poussoir d'actionnement (34) peut être bloqué de manière amovible dans la position actionnée pour maintenir l'organe de soupape (8) par une contrainte permanente dans la deuxième position de commutation, dans lequel de manière appropriée la section d'actionnement (43) peut tourner, dans la position actionnée du poussoir d'actionnement (34), entre une position de déblocage permettant le coulissement axial entre la position non actionnée et la position actionnée et une position de blocage empêchant le coulissement axial entre la position non actionnée et la position actionnée.

14. Dispositif de soupape selon l'une quelconque des revendications 1 à 13, **caractérisé en ce que** l'organe de soupape (8) repose, dans la première position de commutation, au niveau d'un siège de soupape (18) et est relevé, dans la deuxième position, à l'encontre d'une force de ressort, du siège de soupape (18), et/ou que l'axe de coulissement (36) du poussoir d'actionnement (34) s'étend à angle droit par rapport à une direction de déplacement de l'organe de soupape (8).

15. Dispositif de soupape selon l'une quelconque des revendications 1 à 14, **caractérisé en ce que** la soupape de commande (5) est une électrovanne, et/ou que le dispositif de soupape (1) présente une soupape principale (2) pouvant être actionnée de manière fluidique, au niveau de laquelle est disposée en tant que soupape pilote une soupape de commande (5) équipée du dispositif d'actionnement auxiliaire manuel (33), pouvant être actionnée de manière électrique.
